# EUROPÄISCHE PATENTSCHRIFT

(11) **EP 1 680 299 B1**
(45) Veröffentlichungstag und Bekanntmachung des Hinweises auf die Patenterteilung: **04.07.2007**
(21) Anmeldenummer: 04789967.9
(22) Anmeldetag: 12.10.2004
(51) Int. Cl.: B60J 7/12

(54) **CABRIOLET-FAHRZEUG**
CONVERTIBLE
VEHICULE CABRIOLET

(30) Priorität: 25.10.2003 DE 10349849
(43) Veröffentlichungstag der Anmeldung: 19.07.2006
(73) Patentinhaber: Wilhelm Karmann GmbH, 49084 Osnabrück (DE)
(72) Erfinder: HOLLENBECK, Sven, 49492 Westerkappeln (DE)
(86) Internationale Anmeldenummer: PCT/DE2004/002261
(87) Internationale Veröffentlichungsnummer: WO 2005/039910

(56) Entgegenhaltungen:
- DE-A1- 3 914 639
- DE-C1- 3 818 616
- DE-C1- 4 130 180
- DE-U1- 20 006 258

## Beschreibung

Die Erfindung betrifft ein Cabriolet-Fahrzeug mit einem beweglichen Dach, das zumindest in seinem rückwärtigen Bereich einen flexiblen Bezug aufweist, nach dem Oberbegriff des Anspruchs 1. Ein Fahrzeug dieser Art ist aus DE 41 30 180 C bekannt.

Ein Cabriolet-Fahrzeug mit einem ganz oder teilweise flexiblen Dachbezug, etwa einem Vinyl- oder Textilbezug, weist, sofern dieser nicht mit seinem rückwärtigen Endbereich fest an der Karosserie angebunden ist, häufig einen hinteren Spannbügel auf, mit dessen Hilfe der Bezug bei geschlossenem Dach auf einem Karosserieteil aufliegend gespannt werden kann. Es ist dabei bekannt, daß der Spannbügel eine in Draufsicht u-förmige Gestalt mit einem quer zum Fahrzeug verlaufenden Mittelteil und im wesentlichen in Fahrzeuglängsrichtung verlaufenden Seitenschenkeln aufweist. Um eine Beweglichkeit, beispielsweise Schwenkbarkeit, des Spannbügels zur Dachöffnung zu ermöglichen, ist es erforderlich, daß ein den Seitenschenkeln in Fahrtrichtung vorgeordneter Bezugbereich elastisch beweglich, insbesondere während der Spannbügelöffnung einfaltbar, ist. Daher können sich die Seitenschenkel des Spannbügels nicht in fester Verbindung zu dem Bezug bis etwa zu einer Schwenkachse des Spannbügels erstrecken, sondern müssen einen freien Abschnitt für die Bewegung des Bezugbereiches belassen. Dennoch muß auch dieser Bereich bei geschlossenem Dach fest und dichtend auf der Karosserie aufliegen.

Der Erfindung liegt das Problem zugrunde, ein Cabriolet-Fahrzeug der genannten Art hinsichtlich der dichtenden Anlage von Seitenbereichen eines flexiblen Bezugs zu verbessern.

Die Erfindung löst dieses Problem durch ein Cabriolet-Fahrzeug mit den Merkmalen des Anspruchs 1. Vorteilhafte Ausgestaltungen des Gegenstandes der Erfindung ergeben sich aus den weiteren Ansprüchen 2 bis 10.

Durch die Erfindung ist zusätzlich zu dem starren Spannbügel eine weitere Spannhilfe für den flexiblen Bezug oder Bezugbereich geschaffen. Dessen dichtende Anlage an die Karosserie ist dadurch bei geschlossenem Dach verbessert. Weil die zusätzliche Spanneinrichtung im Unterschied zum Spannbügel nicht vollständig starr ist, kann sie sich der Einfaltbewegung des Bezugs während der Dachbewegung oder im abgelegten Zustand anpassen.

Dabei kann eine über beide Fahrzeugseiten durchgehende Spanneinrichtung vorgesehen sein, die etwa den Spannbügel durchgreift, oder konstruktiv einfach kann jeder Fahrzeuglängsseite genau eine Spanneinrichtung zugeordnet ist.

Wenn die Spanneinrichtung(en) jeweils einer im unteren Randbereich des Daches liegenden Dichtungslinie folgt oder folgen und diese in Spannstellung mit einer gegen einen als Widerlager dienenden Bereich der Karosserie drückenden Kraft beaufschlagen, kann eine linienhafte - und nicht nur punktuelle - Verbesserung der Anlage der gesamten Dichtungslinie erreicht werden.

Eine zusätzliche Verbesserung der Abdichtung ergibt sich, wenn daß das Widerlager konvex aufwärts gewölbt ist.

Dabei kann für die linienhafte Anlageverbesserung günstig das oder die Spanneinrichtung(e) zumindest teilweise innerhalb von durch elastische Profile gebildeten Dichtungslinien liegen.

Eine besonders vorteilhafte Ausbildung der Erfindung sieht vor, daß die oder jede flexible Spanneinrichtung in Doppelfunktion nicht allein einen Abwärtsdruck auf einen auf der Karosserie aufliegenden Bereich, sondern auch eine Zugkraft auf seitliche Dachbereiche derart ausübt, daß deren Verspannung gegenüber Seitenscheiben durch Verminderung der Stofflose verbessert wird.

Eine einfache Ausbildung einer flexiblen Spanneinrichtung sieht vor, daß diese durch ein Spannseil mit einem Federelement gebildet ist. Um die oben angeführte Doppelfunktion zu sichern, kann sich das Spannseil etwa über einen großen Bereich der Seitenlinie des Daches von einer Dachspitze bis zu dem hinteren Spannbügel erstrecken.

Weitere Vorteile und Merkmale der Erfindung ergeben sich aus in der Zeichnung dargestellten und nachfolgend erläuterten Ausführungsbeispielen des Gegenstandes der Erfindung.

In der Zeichnung zeigt:
- Fig.1: eine schematische Seitenansicht eines oberen Bereichs eines erfindungsgemäßen Cabriolet-Fahrzeugs mit geschlossenem Dach, der Übersichtlichkeit halber ohne Bezug und zugehörige Dichtungen eingezeichnet,
- Fig.2: eine ähnliche Ansicht wie Fig. 1, jedoch mit eingezeichnetem Bezug,
- Fig.3: das ohne Bezug gezeichnete Dach nach Fig. 1 bei angehobener Dachspitze und leicht aufwärts verschwenktem hinterem Spannbügel mit entspannter flexibler Spanneinrichtung,
- Fig.4: das Detail IV in Fig. 1,
- Fig.5: einen Schnitt entlang der Linie V-V in Fig. 4 mit zusätzlich eingezeichnetem Dichtungsgummi,
- Fig.6: eine ähnliche Ansicht wie Fig. 5 eines alternativ angeordneten, oberhalb des Dichtungsprofils verlegten Spannseils.

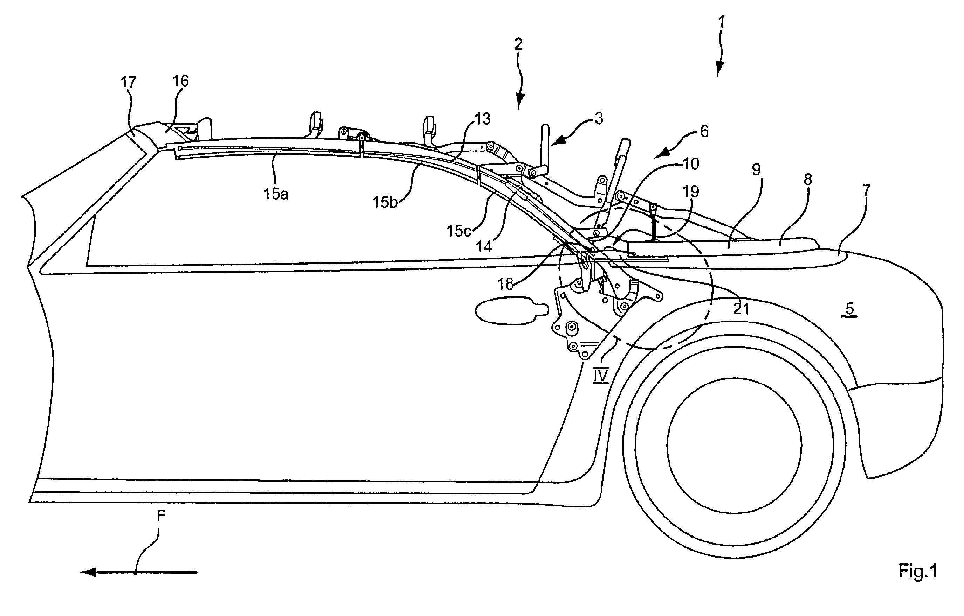

Das in Fig. 1 nur in seinem oberen Bereich schematisch dargestellte Cabriolet-Fahrzeug 1 umfaßt ein bewegliches Dach 2, das hier ein insgesamt mit 3 bezeichnetes bewegliches Gestänge umfaßt, das vollständig von einem Bezug 4 (in Fig. 1 nicht dargestellt) überspannt ist. Alternativ ist auch möglich, daß ein flexibler Bezug nur im hinteren Teil des Daches 2 vorgesehen ist und das Dach in seinem in Fahrtrichtung F vorderen Bereich ein oder mehrere starre Außenhautteile umfaßt. Das Dach 2 kann insgesamt zu seiner Öffnung in der Karosserie 5 ablegbar sein.

Im gezeichneten Ausführungsbeispiel steht im geschlossenen Zustand das Dach 2 mit seinem hinteren Bereich 6 auf einem öffnungsfähigen Deckelteil 7 auf.

In diesem Bereich 6 umfaßt das Dachgestänge 3 einen bei geschlossenem Dach 2 horizontal gelegenen hinteren Spannbügel 8, an den der Bezug 4 angebunden ist und der in dieser Stellung auf dem Deckelteil 7 aufliegt. Der Bügel 8 ist hier in Draufsicht U-förmig und umfaßt einen mittleren, quer zum Fahrzeug 1 liegenden Bereich sowie im wesentlichen in Fahrtrichtung F weisende Seitenschenkel 9. Der Spannbügel 8 ist um eine feste oder hier mit einem hinteren Seitenrahmenteil 15c bewegliche horizontale Achse 10 aus der in Figur 1 gezeichneten Spannstellung, in der der Bezug 4 von dem abgesenkten Bügel 8 gespannt ist, in eine den Bezug 4 entspannende Stellung aufschwenkbar.

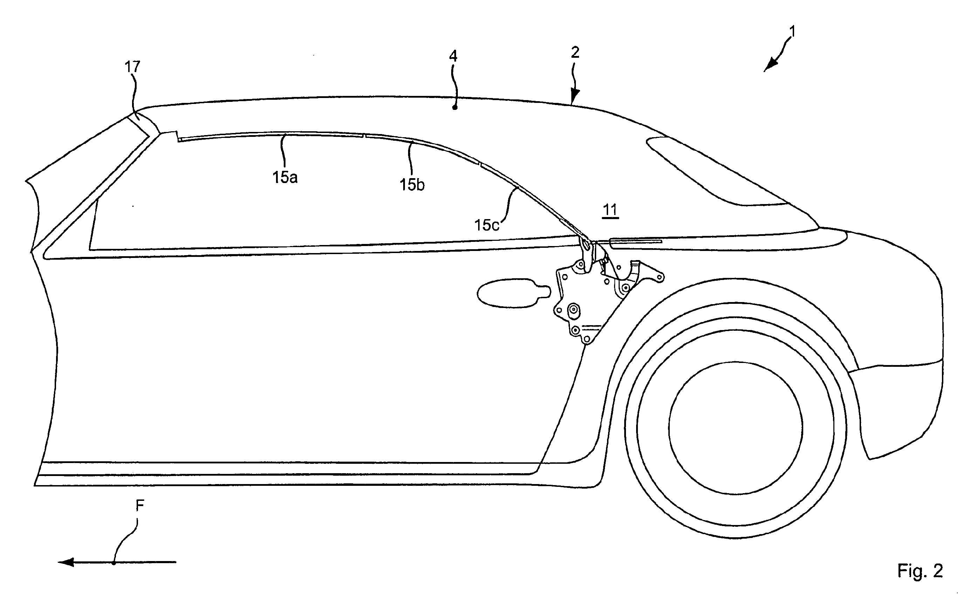

In Fahrtrichtung F vor den seitlichen Schenkeln 9 liegt ein Teilbereich 11 des Bezugs 4, der an seinem unteren Rand eine die seitlichen Schenkel 9 in Fahrtrichtung F nach vorne verlängernde Dichtungslinie 12, etwa mittels jeweils eines gummielastischen Hohlprofils, ausbildet. Dieses soll bei geschlossenem Dach 2 (Fig. 1, Fig. 2) eine dichte Anlage des Bezugs 4 gegenüber dem Abschnitt der Karosserie 5, auf dem es aufliegt, beispielsweise dem Deckelteil 7, bewirken. Der an seinem unteren Rand ohne Unterstützung durch den Spannbügel frei verlaufende Bereich 11 kann einige bis einige zehn Zentimeter lang sein und ist zur Öffnung des Daches 2 elastisch deformierbar und mehr oder minder einfaltbar.

Um bei geschlossenem Dach 2 die Anlage der Dichtungslinie 12 an der Karosserie 5 zu gewährleisten und zu verbessern, ist erfindungsgemäß zumindest eine flexible Spanneinrichtung 13 vorgesehen. Hier ist an jeder Fahrzeuglängsseite genau eine Spanneinrichtung 13 ausgebildet. Diese umaßt jeweils zumindest ein Stahlseil mit einer Zugfeder 14, die hier zwischen zwei Abschnitte des Stahlseils 13 gesetzt ist, jedoch auch an einer Anlenkung des Seils 13 liegen könnte. Das Seil 13 ist mit seinem hinteren Ende am seitlichen Schenkel 9 des Bügels 8 und mit seinem in Fahrtrichtung F vorderen Ende an einem vorderen seitlichen Rahmenteil 15a, das fest mit der Dachspitze 16 verbunden ist, angelenkt. Diese Dachspitze 16 ist in geschlossener Stellung (Fig. 1) an einem vorderen Windschutzscheibenrahmen 17 verriegelt.

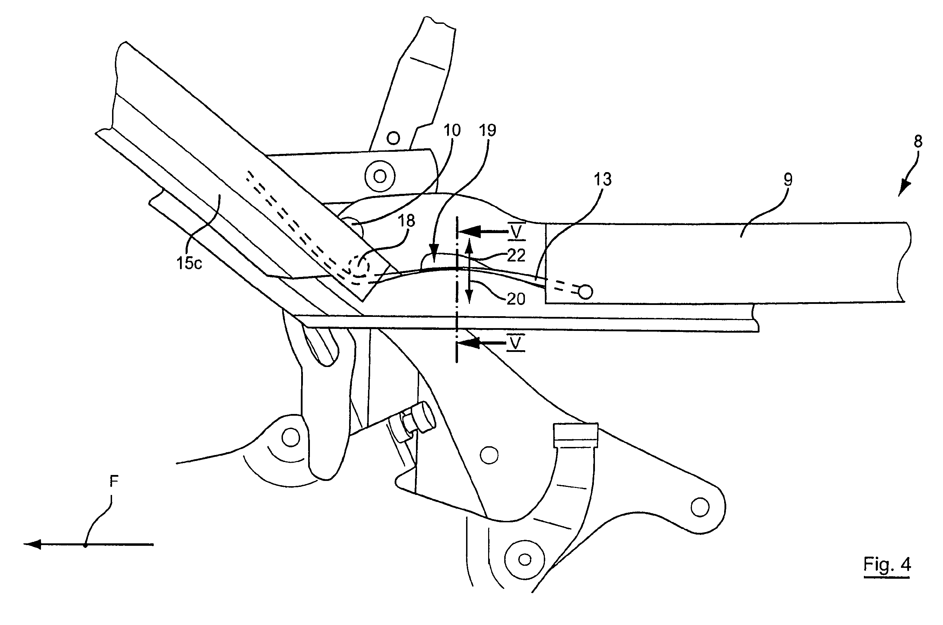

In dieser Stellung erfährt die Spanneinrichtung 13 ihre maximale Zugbelastung, so daß der im Bezugbereich 11 liegende und über die Umlenkung 18 im wesentlichen horizontal liegende Abschnitt 19 der Spanneinrichtung 13 bestrebt ist, möglichst geradlinig zu verlaufen. Dadurch übt sie eine in Richtung des Pfeils 20 wirkende Kraft auf die Dichtungslinie 12 aus (siehe Figur 4) und drückt diese in eine stramm auf die Karosserie 5 gespannte Lage. Insbesondere kann unterstützend hierzu ein leicht konvex nach oben aufragendes Widerlager 21 der Karosserie 5 vorgesehen sein. Dieses unterstützt auch beim Anheben der Dachspitze 16 die in Richtung des Pfeils 22 wirkende Einbiegung des Stahlseils 13.

Dadurch, daß die Spanneinrichtung 13 sich jeweils zwischen dem vorderen seitlichen Rahmenteil 15a und dem Spannbügel 8 erstreckt, kann die Spanneinrichtung 13 in Doppelfunktion nicht nur in dem Bereich 11 auf den Bezug 4 einwirken, sondern auch eine weiter vorne an den seitlichen Rahmenteilen 15a, 15b, 15c befindliche Stofflose gegenüber Seitenscheiben des Fahrzeugs 1 spannen und somit auch hier die Abdichtung verbessern und Windgeräusche minimieren.

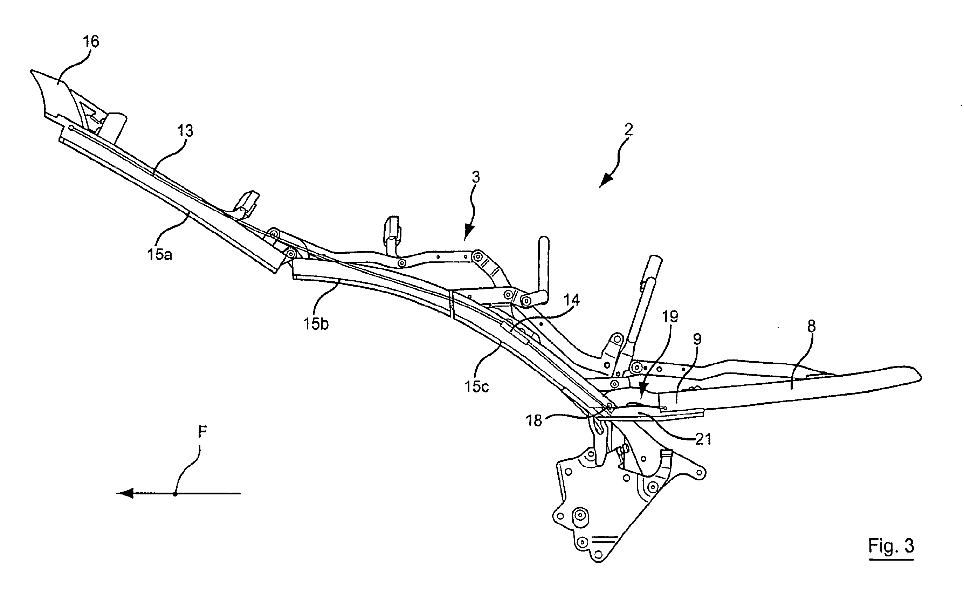

Gleichzeitig ist durch diesen Verlauf der Spanneinrichtung 13 auch sichergestellt, daß bei Anheben der Dachspitze 16 die Spanneinrichtung sofort entspannt wird und daher der Bereich 11 einfalten kann (Fig. 3).

In Figur 4 ist im Detail der Verlauf des Abschnitts 19 des Spannseils 13 unmittelbar vor den seitlichen Schenkeln 9 des Spannbügels 8 dargestellt. Durch Zug beim Schließen der Dachspitze wird das Seil 13 gespannt, entsprechend drückt sie die Dichtungslinie 12 (in Fig. 4 nicht eingezeichnet) in Richtung des Pfeils 20 nach unten. Beim Lösen der Dachspitze (Fig. 3) kann umgekehrt die Entspannung das Einbiegen des Seils 13 in Richtung des Pfeils 22 ermöglichen, so daß der Spannbügel 8 aufwärts schwenken kann und das darunter liegende Deckelteil hinreichend viel Freiraum zu seiner Öffnung erhält. Das Dach 2 kann dann in die Karosserie abgelegt werden.

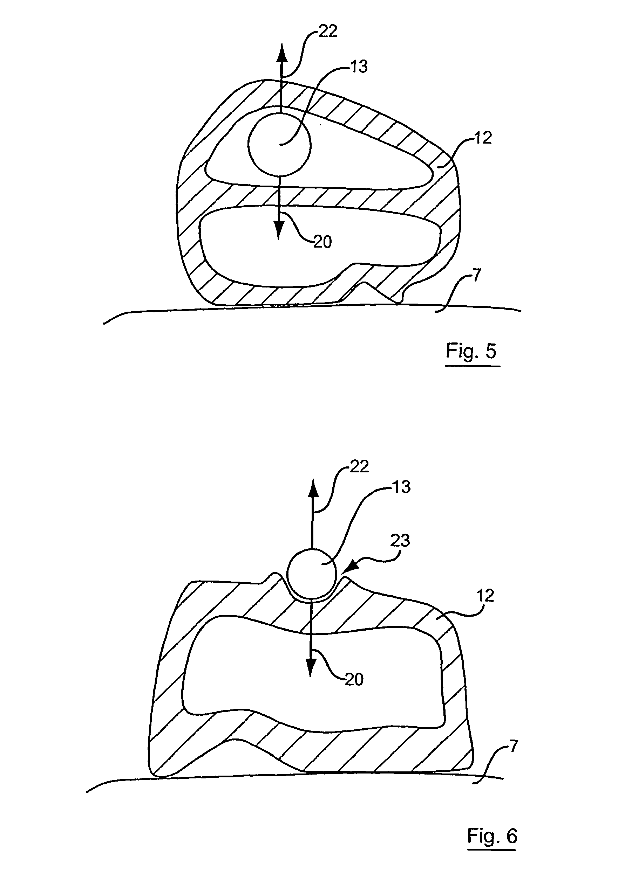

Die in Figur 5 eingezeichnete Verlegung des flexiblen Spannseils 13 innerhalb der Dichtungslinie 12 sorgt für eine gegen äußeren Verschleiß geschützte Anordnung des Stahlseils 13. Die linienhafte Druckausübung auf die Dichtungslinie 12 kann besonders gut gewährleistet werden.

Auch eine Verlegung des Seils 13 oberhalb der Dichtungslinie 12, etwa in einer angeformten Aufnahmemulde 23, ist möglich und erleichtert die Verlegung der Spanneinrichtung 13.

Anstelle eines Spannseils können auch andere flexible und elastisch verformbare Elemente für die Spanneinrichtung 13 vorgesehen sein, etwa eine Blatt- oder andere Feder. Auch ist es möglich, daß die Bewegung der Spanneinrichtung ein zusätzliches Antriebselement erfordert und diese nicht, wie hier, durch die Bewegung des Daches automatisch mit gespannt oder entspannt wird.

## Patentansprüche

1. Cabriolet-Fahrzeug (1) mit einem beweglichen Dach (2), das zumindest in seinem rückwärtigen Bereich (6) einen flexiblen Bezug (4) aufweist, der in seinem hinteren Bereich an einem Spannbügel (8) gehalten ist, welcher aus einer das geschlossene Dach (2) formenden Spannstellung aufwärts verlagerbar ist, wobei dem Bezug (4) zumindest eine flexible Spanneinrichtung (13) zugeordnet ist, die bei geschlossenem Dach (2) eine spannende Kraft auf Randbereiche des Bezugs (4) ausübt,
**dadurch gekennzeichnet,**
**daß** die Spanneinrichtung(en) (13) jeweils einer Dichtungslinie (12) des Bezugs (4) an einem im unteren und in Fahrtrichtung (F) vor dem Spannbügel (8) befindlichen Randbereich des Daches zugeordnet ist oder sind und diese in Spannstellung bei geschlossenem Dach (2) mit einer abwärts (Pfeil 20) drückenden Kraft beaufschlägt oder beaufschlagen.

2. Cabriolet-Fahrzeug nach Anspruch 1,
**dadurch gekennzeichnet,**
**daß** jeder Fahrzeuglängsseite genau eine Spanneinrichtung (13) zugeordnet ist.

3. Cabriolet-Fahrzeug nach einem der Ansprüche 1 oder 2,
**dadurch gekennzeichnet,**
**daß** die Spanneinrichtung(en) (13) die Dichtungslinie (12) jeweils in Spannstellung mit einer auf einen als Widerlager dienenden Bereich (21) der Karosserie (5) drückenden Kraft beaufschlägt oder beaufschlagen.

4. Cabriolet-Fahrzeug nach Anspruch 3,
**dadurch gekennzeichnet,**
**daß** das Widerlager (21) konvex gewölbt ist.

5. Cabriolet-Fahrzeug nach einem der Ansprüche 1 bis 4,
**dadurch gekennzeichnet,**
**daß** die Spanneinrichtung(en) (13) zumindest teilweise innerhalb von: durch elastische Profile gebildeten Dichtungslinien (12) liegt oder liegen.

6. Cabriolet-Fahrzeug nach einem der Ansprüche 1 bis 5,
**dadurch gekennzeichnet,**
**daß** eine oder jede Spanneinrichtung (13) in Doppelfunktion bei geschlossenem Dach (2) sowohl eine den Randbereich (11) vor dem Spannbügel (8) nach unten drückende als auch eine weiter in Fahrtrichtung (F) vorgeordnete seitliche Dichtungen gegen obere Ränder von Seitenscheiben spannende Kraft ausübt.

7. Cabriolet-Fahrzeug nach einem der Ansprüche 1 bis 6,
**dadurch gekennzeichnet,**
**daß** eine Spanneinrichtung (13) sich zwischen einem vorderen Dachbereich, einer sog. Dachspitze (16), und dem hinteren Spannbügel (8) erstreckt.

8. Cabriolet-Fahrzeug nach einem der Ansprüche 1 bis 7,
**dadurch gekennzeichnet,**
**daß** die oder jede Spanneinrichtung (13) eine Zugfeder (14) umfaßt.

9. Cabriolet-Fahrzeug nach einem der Ansprüche 1 bis 8,
**dadurch gekennzeichnet,**
**daß** die oder jede Spanneinrichtung (13) ein Spannseil umfaßt.

10. Cabriolet-Fahrzeug nach einem der Ansprüche 1 bis 9,
**dadurch gekennzeichnet,**
**daß** dieses ein karosserieseitiges Deckelteil (7) umfaßt, auf dem das hintere Dachende (6) in geschlossener Stellung dichtend aufsteht und das zur Aufnahme des Daches (2) in der Karosserie (5) zu öffnen ist.

## Claims

1. A cabriolet vehicle (1) with a movable roof (2) which has, at least in its rear area (6), a flexible covering (4) which, in its rear area, is held at a tension bracket (8) which is upwardly displaceable out of a tensioning position forming the closed roof (2), whereby at least one flexible tensioning device (13) is assigned to the covering (4), said tensioning device exerting, when the roof (2) is closed, a tensioning force on side areas of the covering (4),
**characterised in that**
the tensioning device(s) (13) is or are each assigned to a sealing line (12) of the covering (4) at a lower roof edge area located in the direction of travel (F) in front of the tensioning bracket (8) and, in the tensioning position when the roof (2) is closed, acts or act upon it by means of a force which presses downwards (arrow 20).

2. The cabriolet vehicle according to Claim 1,
**characterised in that**
a tensioning device (13) is exactly assigned to each vehicle longitudinal side.

3. The cabriolet vehicle according to one of claims 1 or 2,
**characterised in that**
the tensioning device(s) (13) acts or act, in the tensioning position in each case, upon the sealing line (12) by means of a force pressing on a car body (5) area (21) which serves as a bearing.

4. The cabriolet vehicle according to Claim 3,
**characterised in that**
the bearing (21) is curved in a convex manner.

5. The cabriolet vehicle according to one of claims 1 to 4,
**characterised in that**
the tensioning device(s) (13) lies or lie at least partly inside of seal lines (12) which are formed by elastic profiles.

6. The cabriolet vehicle according to one of claims 1 to 5,
**characterised in that**
one or each tensioning device (13) exerts, in a double function when the roof (2) is closed, both a force which presses down the edge area (11) in front of the tensioning bracket (8) and a force which is arranged forwardly in the direction of travel (F) and which tensions lateral seals against upper edges of side windows.

7. The cabriolet vehicle according to one of claims 1 to 6,
**characterised in that**
that a tensioning device (13) extends between a front roof area, a so-called roof summit (16) and the rear tensioning bracket (8).

8. The cabriolet vehicle according to one of claims 1 to 7,
**characterised in that**
the or each tensioning device (13) includes a tension spring (14).

9. The cabriolet vehicle according to one of claims 1 to 8,
**characterised in that**
the or each tensioning device (13) includes a tensioning rope.

10. The cabriolet vehicle according to one of claims 1 to 9,
**characterised in that**
it includes, at the car body side, a cover part (7) on which the rear roof end (6) stands up in a sealing manner in the closed position and which is to be opened in order to receive the roof (2) into the car body (5).

## Revendications

1. Véhicule cabriolet (1) comprenant un toit mobile (2) qui présente au moins dans sa partie arrière (6) un revêtement flexible (4) qui est maintenu dans sa région arrière sur un étrier de tensionnement (8) qui peut être déplacé vers le haut depuis une position de tensionnement formant le toit fermé (2), au moins un dispositif de tensionnement flexible (13) étant associé au revêtement (4) et exerçant une force de tensionnement sur les régions marginales du revêtement (4) lorsque le toit (2) est fermé,
**caractérisé en ce que**
le(s) dispositif(s) de tensionnement (13) est ou sont associés à chaque fois à une ligne de joint d'étanchéité (12) du revêtement (4) au niveau d'une région marginale du toit située en bas et dans la direction de conduite (F) avant l'étrier de tensionnement (8), et sollicite(nt) cette ligne de joint d'étanchéité dans la position de tensionnement lorsque le toit (2) est fermé avec une force pressant vers le bas (flèche 20).

2. Véhicule cabriolet selon la revendication 1,
**caractérisé en ce que**
l'on associe à chaque côté longitudinal du véhicule exactement un dispositif de tensionnement (13).

3. Véhicule cabriolet selon l'une quelconque des revendications 1 ou 2,
**caractérisé en ce que**
le(s) dispositif(s) de tensionnement (13) sollicite(nt) la ligne de joint d'étanchéité (12) à chaque fois dans la position de tensionnement avec une force pressant sur une région (21) de la carrosserie (5) servant de butée.

4. Véhicule cabriolet selon la revendication 3,
**caractérisé en ce que**
la butée (21) a une courbure convexe.

5. Véhicule cabriolet selon l'une quelconque des revendications 1 à 4,
**caractérisé en ce que**
le(s) dispositif(s) de tensionnement (13) se situe(nt) au moins en partie à l'intérieur de lignes de joint d'étanchéité (12) formées par des profilés élastiques.

6. Véhicule cabriolet selon l'une quelconque des revendications 1 à 5,
**caractérisé en ce que**
un ou chaque dispositif de tensionnement (13) exerce, avec une double fonction, lorsque le toit (2) est fermé, à la fois une force pressant vers le bas la région marginale (11) avant l'étrier de tensionnement (8) et une force tendant des joints d'étanchéité latéraux placés davantage en avant dans la direction de conduite (F) contre des bords supérieurs de vitres latérales.

7. Véhicule cabriolet selon l'une quelconque des revendications 1 à 6,
**caractérisé en ce**
**qu'**un dispositif de tensionnement (13) s'étend entre une région de toit avant, qu'on appelle une pointe de toit (16) et l'étrier de tensionnement arrière (8).

8. Véhicule cabriolet selon l'une quelconque des revendications 1 à 7,
**caractérisé en ce que**
le ou chaque dispositif de tensionnement (13) comprend un ressort de traction (14).

9. Véhicule cabriolet selon l'une quelconque des revendications 1 à 8,
**caractérisé en ce que**
le ou chaque dispositif de tensionnement (13) comprend un câble de tensionnement.

10. Véhicule cabriolet selon l'une quelconque des revendications 1 à 9,
**caractérisé en ce que**
celui-ci comprend une partie de couvercle (7) du côté de la carrosserie, sur laquelle l'extrémité de toit arrière (6) est dressée hermétiquement dans la position fermée et qui doit être ouverte pour loger le toit (2) dans la carrosserie (5).
